# NEUE EUROPÄISCHE PATENTSCHRIFT

(11) **EP 3 087 277 B2**
(45) Veröffentlichungstag und Bekanntmachung des Hinweises auf die Entscheidung über den Einspruch: **27.10.2021**
(45) Hinweis auf die Patenterteilung: 18.04.2018
(21) Anmeldenummer: 14776581.2
(22) Anmeldetag: 22.09.2014
(51) Int. Cl.: F04D 13/06, F04D 15/00, F04D 29/22, H02K 29/08, H02K 5/12, H02K 11/25, H02K 5/04

(54) **ELEKTROMOTORISCH ANGETRIEBENE FLÜSSIGKEITSPUMPE, INSBESONDERE ZUR ZWANGSSCHMIERUNG EINES SCHALTGETRIEBES FÜR KRAFTFAHRZEUGE**
ELECTRIC MOTOR DRIVEN FLUID PUMP, IN PARTICULAR FOR THE FORCED LUBRICATION OF A MANUAL TRANSMISSION OF A MOTOR VEHICLE
POMPE À LIQUIDE ENTRAÎNÉE PAR UN MOTEUR ÉLECTRIQUE EN PARTICULIER POUR LA LUBRIFICATION FORCÉE D'UNE BOÎTE DE VITESSES DE VÉHICULES AUTOMOBILES

(30) Priorität: 29.11.2013 DE 102013017975
(43) Veröffentlichungstag der Anmeldung: 02.11.2016
(73) Patentinhaber: FTE automotive GmbH, 96106 Ebern (DE)
(72) Erfinder: FECKE, Karin, D-97631 Bad Königshofen (DE); DIRAUF, Markus, D-96106 Ebern (DE); REUL, Alexander, 96158 Frensdorf (DE); WILL, Wilhelm, D-97500 Rudendorf (DE); OTTO, Jürgen, D-99089 Erfurt (DE); STÖSSEL, Roland, 97514 Oberaurach (DE)
(74) Vertreter: Valeo Powertrain Systems
(86) Internationale Anmeldenummer: PCT/EP2014/002563
(87) Internationale Veröffentlichungsnummer: WO 2015/078540

(56) Entgegenhaltungen:
- EP-A2- 1 850 450
- EP-A2- 2 587 066
- WO-A1-2007/023014
- DE-A1- 19 934 382
- DE-C1- 10 045 597
- DE-C1- 19 956 380
- JP-A- 2005 188 296
- JP-A- 2005 344 589

## Beschreibung

### TECHNISCHES GEBIET

Die vorliegende Erfindung bezieht sich auf eine elektromotorisch angetriebene Flüssigkeitspumpe. Insbesondere bezieht sich die Erfindung auf eine solche Flüssigkeitspumpe, wie sie in modernen Kraftfahrzeugen massenweise zur Zwangsschmierung von Schaltgetrieben zum Einsatz kommen.

Ein Schaltgetriebe, welches im Kraftfahrzeug in einem Antriebsstrang zwischen einer Verbrennungskraftmaschine und anzutreibenden Fahrzeugrädern angeordnet ist, weist zur Schmierung mit einem Schmiermittel, wie Getriebeöl, ein Schmiermittelsystem auf, welches dazu dient, das Schmiermittel aus einem Schmiermittelsumpf im Getriebegehäuse an zu schmierende Stellen zu bringen. Zu Letzteren zählen insbesondere in Eingriff stehende Zahnräder und Lager für die sich drehenden Teile, namentlich Wellen und Zahnräder.

Bei den herkömmlichen Schmiermittelsystemen in Schaltgetrieben unterscheidet man grundsätzlich zwischen einer Tauchschmierung, bei welcher die Zahnräder im Schmiermittelsumpf "planschen" und das Schmiermittel beim Weiterdrehen auf die Zahnräder und Lager verteilen, und einer Zwangsschmierung vermittels einer oder mehrerer Pumpen, die das Schmiermittel aus dem Schmiermittelsumpf über ein Leitungssystem an die zu schmierenden Stellen fördern. Wird ausschließlich zwangsgeschmiert, d.h. keines der Zahnräder taucht beabsichtigt in den Schmiermittelsumpf ein, spricht man von einer "Trockensumpfschmierung", die gegenüber einer Tauchschmierung oder einer kombinierten Schmierung den Vorteil besitzt, dass es durch die Zahnräder nicht zu einem Eintrag von Luft in das Schmiermittel und damit nicht zur Bildung von Ölschaum kommt, der zu Störungen bei der Getriebeschmierung führen kann. Darüber hinaus werden bei Schaltgetrieben mit Trockensumpfschmierung sogenannte "Planschverluste" vermieden, die den Getriebewirkungsgrad verschlechtern.

### STAND DER TECHNIK

Für das Schmiermittelsystem von Schaltgetrieben mit Trockensumpfschmierung kommen im Stand der Technik bereits elektromotorisch angetriebene Schmiermittelpumpen zum Einsatz (siehe z.B. die Druckschrift DE-A-10 2005 005 154). Zu unterscheiden sind hier Schmiermittelsysteme, bei denen das Schmiermittel mittels der Pumpe - in der Regel eine Zahnradpumpe - unter Druck an Düsen gefördert wird, über die das Schmiermittel auf die zu schmierenden Stellen spritzt, und Schmiermittelsysteme mit einer Pumpe - etwa eine Kreiselpumpe - mittels der das Schmiermittel lediglich zu einem Verteiler mit Vorratsbehälter gefördert wird, von wo das Schmiermittel im Wesentlichen drucklos auf die Zahneingriffe und Lagerstellen abregnet bzw. tropft. Das letzterwähnte Niederdruck-Schmiermittelsystem stellt das hier bevorzugte Pumpenanwendungsgebiet dar, insbesondere weil es gegenüber der Drucklösung Kostenvorteile bietet. So ist eine Filteranordnung zur Vermeidung einer Düsenverstopfung entbehrlich, die Verschmutzungsanfälligkeit ist insgesamt geringer, für den Elektromotor kann eine schwächere Motorleistung vorgesehen werden, etc.

Konstruktive Details einer elektromotorisch angetriebenen Kreiselpumpe für die Schmiermittelversorgung eines Getriebes sind z.B. der Druckschrift DE-A-10 2007 018 504 (Fig. 7) zu entnehmen. Hier bilden ein Elektromotor und eine von ihm angetriebene Pumpe eine Motor-Pumpen-Einheit, welche direkt im Schmiermittel (Betriebsmedium im Sprachgebrauch dieser Druckschrift) unterhalb eines Flüssigkeitsspiegels angeordnet ist. Der Elektromotor und die Pumpe liegen bei diesem Stand der Technik hintereinander, wobei die Motor-Pumpen-Einheit ferner noch von einer Leiteinrichtung umgeben ist, die dazu dient, den Ansaugstrom entlang der Oberfläche des sich betriebsbedingt erwärmenden Elektromotors bis hin zu einem Sauganschluss der Pumpe zu führen. Durch den thermischen Kontakt zwischen dem Elektromotor und dem an ihm entlang geführten Schmiermittel soll der Wärmeübergang verbessert und das Schmiermittel erwärmt werden, so dass sich dessen Viskosität verringert und damit auch der Ansaugwiderstand. Im Ergebnis soll sich die Fördermenge der Pumpe erhöhen und damit die den Schmierstellen zugeführte Menge an Schmierstoff; zudem ist eine Erweiterung des Temperaturbereichs nach unten beabsichtigt, bei dem die Pumpe noch zuverlässig Schmiermittel fördern kann. Ein Nachteil dieses Stands der Technik ist indes darin zu sehen, dass die Motor-Pumpen-Einheit mit der sie umgebenden Leiteinrichtung sowohl in radialer Richtung als auch in axialer Richtung einen relativ großen Bauraum beansprucht. Der zur Verfügung stehende Einbauraum ist am Boden des Getriebegehäuses in der Regel jedoch sehr knapp bemessen.

Des Weiteren ist aus der Druckschrift DE-A-10 2006 012 838 (Fig. 3c) eine elektromotorisch angetriebene Zusatzölpumpe bekannt, die innerhalb einer Ölwanne eines Automatgetriebes angeordnet ist. Auch bei diesem Stand der Technik liegen die Pumpe und der Elektromotor hintereinander, wobei sich Letzterer außerhalb der Ölwanne befindet. Dabei erfolgt der Antrieb der Pumpe mechanisch über eine Welle, welche durch die Wand der Ölwanne hindurchgeführt und gegenüber dieser Wand abgedichtet ist. Auch diese Hintereinanderanordnung von Pumpe und Elektromotor nimmt einen relativ großen Bauraum in Anspruch. Außerdem kommt bevorzugt ein Bürstenmotor zum Einsatz, der als solcher zwingend außerhalb des Ölraums anzuordnen und zudem verschleißanfällig ist.

Ferner offenbaren die Druckschriften DE-A-199 34 382 und DE-A-199 56 380 Flüssigkeitspumpen, die als Kühlwasserpumpen für den Kühlkreislauf/Heizkreislauf eines Kraftfahrzeugs einsetzbar sind. Diese Flüssigkeitspumpen besitzen einen integrierten Elektromotor mit einem Stator und einem Rotor, wobei der Stator ein Klauenpolstator ist, während der Rotor ein Flügelrad der Pumpe bildet. Bei diesem Stand der Technik (DE-A-199 34 382: Spalte 3, Zeilen 47 bis 51; DE-A-199 56 380: Spalte 4, Zeilen 17 bis 22) kann insbesondere für die Kommutierung des Elektromotors ein nicht dargestellter Magnetfeldsensor an einem nicht näher präzisierten Ort vorgesehen sein, wo er dem veränderlichen Magnetfeld des rotierenden Rotors ausgesetzt ist.

Aus der DE-A-10 2009 049 904 (Fig. 1) ist ebenfalls eine elektromotorisch angetriebene Wasserpumpe bekannt, bei der eine abdichtend zwischen einem Stator und einer Läufereinheit angeordnete Trennwand in einfacher und kostengünstiger Weise aus einem nichtrostenden, tiefziehfähigen Material ausgebildet ist. Hierbei ist an zentraler Stelle der Trennwand ein im Wesentlichen hohlkegelförmiges Halteelement angeformt, das auf seiner der Läufereinheit zugewandten Seite mit einer sphärischen Lagerfläche für einen kugelförmigen Gleitkörper zur Lagerung der Läufereinheit versehen ist und auf seiner von der Läufereinheit abgewandten Seite einen Hohlraum begrenzt, in dem ein nicht dargestellter Temperatur- und/oder Magnetfeldsensor aufgenommen sein kann (siehe die Patentansprüche 9 & 10 sowie den Absatz [0027] der Beschreibung), so dass die Lagerstelle für die Läufereinheit und der Sensor bezüglich der Drehachse der Pumpe zwingend axial hintereinander angeordnet sind.

Weitere elektromotorisch angetriebene, entlang der Pumpendrehachse gesehen jedoch relativ lang bauende Pumpen, die insbesondere als Wasserpumpen in Heizungskreisläufen zum Einsatz kommen, sind schließlich den Druckschriften DE-A-100 45 597 (Fig. 7 & 8) und DE-A-100 52 797 (Fig. 1) zu entnehmen.

Eine weitere elektromotorisch angetriebene Flüssigkeitspumpe ist aus der den Oberbegriff des Patentanspruchs 1 bildenden Druckschrift EP-A-1 850 450 bekannt. EP 2 587 066 offenbart den Oberbegriff von Anspruch 1.

### AUFGABENSTELLUNG

Der Erfindung liegt die Aufgabe zugrunde, insbesondere zur Zwangsschmierung eines Schaltgetriebes für Kraftfahrzeuge eine elektromotorisch angetriebene Flüssigkeitspumpe bereitzustellen, welche die obigen Nachteile vermeidet und gegenüber dem geschilderten Stand der Technik in kostengünstiger Ausgestaltung vor allem eine geringere Bauhöhe aufweist.

### DARSTELLUNG DER ERFINDUNG

Diese Aufgabe wird durch die im Patentan-spruch 1 angegebenen Merkmale gelöst. Vorteilhafte bzw. zweckmäßige Weiterbildungen der Erfindung sind Gegenstand der Patentansprüche 2 bis 14.

Eine erfindungsgemäße, elektromotorisch angetriebene Flüssigkeitspumpe, die insbesondere zur Zwangsschmierung eines Schaltgetriebes für Kraftfahrzeuge einsetzbar ist, hat ein einen Flüssigkeitseingang und einen Flüssigkeitsausgang aufweisendes Gehäuse und einen darin aufgenommenen, elektronisch kommutierten Elektromotor, der einen um eine Drehachse drehbaren, im Wesentlichen becherförmigen, magnetischen Rotor mit Mitteln zur Flüssigkeitsförderung, einen ringförmigen, eine Motorwicklung aufweisenden Stator, welcher in bezüglich der Drehachse koaxialer Anordnung den Rotor entlang der Drehachse gesehen wenigstens teilweise umgibt, sowie einen Magnetfeldsensor zur Lageerkennung des Rotors besitzt, wobei das Gehäuse einen Statorgehäuseabschnitt aufweist, der den Stator trägt, diesen von einem Flüssigkeitsraum trennt, in dem der Rotor angeordnet ist, und sich entlang der Drehachse gesehen in den Rotor mit einem Gehäuseabsatz hinein erstreckt, welcher zur Aufnahme des Magnetfeldsensors ausgebildet ist.

Dadurch, dass zunächst der Antrieb der erfindungsgemäßen Flüssigkeitspumpe durch einen elektronisch kommutierten Elektromotor - im Gegensatz zu einem Bürstenmotor - ausgebildet ist, ist die oben zum Stand der Technik angesprochene Verschleiß- und Störanfälligkeit nicht vorhanden; die Flüssigkeitspumpe kann auch frei platziert werden, z.B. in bzw. unmittelbar an einem Ölraum eines Schaltgetriebes.

Einer besonders kompakten Bauform kommt hierbei erst einmal zugute, dass der Rotor zugleich Pumpenbestandteil (Mittel zur Flüssigkeitsförderung) wie auch Motorbestandteil (magnetisch) ist. Irgendwelche (mit)drehende Verbindungen zwischen der Antriebs- und der Pumpenseite sind damit entbehrlich. Bezüglich einer geringen Bauhöhe der erfindungsgemäßen Flüssigkeitspumpe kommt des Weiteren der Ausgestaltung des im Pumpengehäuse auch medientrennenden Statorgehäuseabschnitts eine besondere Rolle zu: Zum einen trägt der Statorgehäuseabschnitt den ringförmigen Stator derart, dass dieser den becherförmigen Rotor in axialer Richtung gesehen zumindest zu einem Teil überdeckt. Zum anderen besitzt der Statorgehäuseabschnitt den in den becherförmigen Rotor hineinragenden Gehäuseabsatz, an dem der Magnetfeldsensor für die elektronische Kommutierung aufgenommen ist. Durch diese quasi "geschachtelte" Anordnung der antriebsrelevanten Bauelemente im Wesentlichen in der Rotorebene unter Nutzung auch des Rotorinnenbereichs baut die Flüssigkeitspumpe sehr flach. Mit anderen Worten gesagt liegt - anders als bei dem weiter oben geschilderten Stand der Technik - keine reine Hintereinanderanordnung der einzelnen Baugruppen sondern vielmehr eine "Ineinanderanordnung" derselben vor.

In einer vorteilhaften Weiterbildung der Flüssigkeitspumpe kann das Gehäuse über eine pumpenäußere Flanschfläche an einem Flüssigkeitsbehälter anflanschbar sein und in mehrteiliger Ausbildung neben dem Statorgehäuseabschnitt einen den Flüssigkeitseingang und den Flüssigkeitsausgang aufweisenden Pumpengehäuseabschnitt, welcher zusammen mit dem Statorgehäuseabschnitt den Flüssigkeitsraum begrenzt, und einen Motorgehäuseabschnitt besitzen, der zusammen mit dem Statorgehäuseabschnitt einen Elektronikraum begrenzt, in dem sich wenigstens der Stator befindet. Bei dieser Ausgestaltung umfasst das Pumpengehäuse in einfacher und montagegünstiger Weise nur ein Minimum an Gehäusebauteilen, um "nasse" Bereiche der Pumpe von "trockenen" Bereichen der Pumpe zu trennen und Letztere insgesamt gegenüber der Flüssigkeit bzw. Umgebung/Atmosphäre zu begrenzen, nämlich (a) den Pumpengehäuseabschnitt als über die Flüssigkeitsein- und -ausgänge definiert durchlässige Begrenzung zur Flüssigkeit, (b) den Statorgehäuseabschnitt als medientrennende Begrenzung zwischen dem "nassen" Flüssigkeitsraum und dem "trockenen" Elektronikraum in der Pumpe und (c) den Motorgehäuseabschnitt als Begrenzung zur übrigen Umgebung/Atmosphäre hin.

Prinzipiell können die Gehäusebauteile der Flüssigkeitspumpe aus einem Leichtmetall, wie z.B. einer Aluminiumlegierung bestehen. Mit Blick auf geringe Herstellkosten bevorzugt ist es indes, wenn die Gehäusebauteile als Kunststoffteile ausgeführt sind, die spritztechnisch, d.h. mittels Kunststoff-Spritzgießen hergestellt werden können. Zur Befestigung der Gehäusebauteile aneinander ist beispielsweise eine Verschraubung, eine Vernietung oder eine Schnappverbindung denkbar. Für eine besonders kostengünstige Gehäuseausgestaltung ist es jedoch bevorzugt, wenn die als Kunststoffteile ausgeführten Pumpengehäuse- und Motorgehäuseabschnitte miteinander verschweißt sind.

Des Weiteren kann der Statorgehäuseabschnitt im Hinblick auf eine einfache und axial sowie radial positionsgenaue Befestigung im Gehäuse der Flüssigkeitspumpe einen Statorgehäuseflansch aufweisen, der zwischen dem Pumpengehäuseabschnitt und dem Motorgehäuseabschnitt eingespannt ist und den Statorgehäuseabschnitt am Motorgehäuseabschnitt bezüglich der Drehachse des Rotors (mit) zentriert.

In einer besonders bevorzugten Ausgestaltung der Flüssigkeitspumpe kann ein Dichtelement vorgesehen sein, welches - in multifunktionaler Weise - zugleich (erstens) an der pumpenäußeren Flanschfläche des Gehäuses gegenüber dem Flüssigkeitsbehälter abdichtet ("pumpenäußere" Trennung zwischen Flüssigkeit und Umgebung/Atmosphäre), (zweitens) den Flüssigkeitsraum vom Elektronikraum trennt ("pumpeninnere" Medientrennung) und (drittens) den Elektronikraum zur Umgebung hin abdichtet (Dichtigkeit gegen Eindringen von Feuchtigkeit bzw. Verschmutzung der Pumpe). Im Gegensatz zum einschlägigen Stand der Technik ist somit keine Mehrzahl von Einlegedichtungen erforderlich bzw. zu handhaben, die damit verbundenen Nachteile (Montageaufwand, Gefahr des "Wanderns" einzelner Dichtungen, etc.) werden vermieden, ohne dass gehäuseseitige Ersatzmaßnahmen, wie z.B. eine Dichtverschweißung von Gehäusebauteilen vorgesehen werden müssen. Da die Pumpe darüber hinaus bereits die Mittel zur "pumpenäußeren" Abdichtung trägt, gestaltet sich die Montage / das Anflanschen der Pumpe am Flüssigkeitsbehälter einfach. Im Ergebnis lässt sich eine preiswerte, prozesssichere und damit auch zuverlässige Pumpenabdichtung erzielen.

Hierbei kann die pumpenäußere Flanschfläche des Gehäuses mit einer umlaufenden Nut zur Aufnahme eines ersten Dichtabschnitts des Dichtelements versehen sein, der mit wenigstens einer, vorzugsweise aber zwei Dichtlippen über die pumpenäußere Flanschfläche vorsteht, um gegenüber dem Flüssigkeitsbehälter abzudichten. Eine derartige Doppeldichtung ist besonders schmutzunempfindlich und zuverlässig dichtend. Kratzer od.dgl. an der Flanschfläche des Flüssigkeitsbehälters können "überbrückt" werden; mithin bestehen hier keine besonderen Reinheits- oder Glattheitsanforderungen an die Flanschfläche.

Ferner kann die Anordnung so getroffen sein, dass der Pumpengehäuseabschnitt einen Pumpengehäuseflansch aufweist, an dem auf gegenüberliegenden Seiten die pumpenäußere Flanschfläche und eine pumpeninnere Flanschfläche ausgebildet sind, die mit einer umlaufenden Nut zur Aufnahme eines zweiten Dichtabschnitts des Dichtelements versehen ist, der mit zwei Dichtlippen über die pumpeninnere Flanschfläche vorsteht, von denen - in klarer und eindeutiger Funktionszuordnung der Dichtlippen - die eine Dichtlippe mit dem Statorgehäuseabschnitt zusammenwirkt, um den Flüssigkeitsraum vom Elektronikraum zu trennen, während die andere Dichtlippe mit dem Motorgehäuseabschnitt zusammenwirkt, um den Elektronikraum zur Umgebung hin abzudichten. Dabei können die Dichtlippen in vorteilhafter Weise unterschiedliche, ggf. auch nur toleranzbedingt abweichende Gehäusedicken in den Flanschbereichen des Statorgehäuseabschnitts und des Motorgehäuseabschnitts ausgleichen.

Weiterhin kann das aus einem elastomeren Material bestehende Dichtelement am Pumpengehäuseabschnitt befestigt sein, so dass das Dichtelement in montagefreundlicher Weise verliersicherer Bestandteil der Flüssigkeitspumpe ist. Grundsätzlich kann das Dichtelement hierbei am Pumpengehäuseabschnitt eingeknüpft oder aufgesteckt sein. Im Hinblick auf eine einfache Herstellbarkeit und die Prozesssicherheit (Vermeidung von Montagefehlern) bevorzugt ist es indes, wenn das Dichtelement an dem Pumpengehäuseabschnitt formschlüssig angespritzt ist.

Für eine zuverlässige formschlüssige Festlegung des Dichtelements am Pumpengehäuseabschnitt kann zwischen der umlaufenden Nut an der pumpenäußeren Flanschfläche und der umlaufenden Nut an der pumpeninneren Flanschfläche eine Mehrzahl von in Umfangsrichtung beabstandeten Öffnungen vorgesehen sein, die mit dem elastomeren Material des Dichtelements durchspritzt sind, um den ersten Dichtabschnitt und den zweiten Dichtabschnitt des Dichtelements miteinander zu verbinden. Das Dichtelement ist somit vorteilhaft in einem Arbeitsgang am Pumpengehäuseabschnitt aufspritzbar. Bei überlappender bzw. deckungsgleicher

Anordnung der Nuten auf den beiden Seiten des Pumpengehäuseflansches baut die Dichtungsanordnung auch in radialer Richtung sehr kompakt. Darüber hinaus hat eine solche Anordnung, bei der die Abdichtung zu zwei Seiten quasi auf einem Durchmesser erfolgt, den Vorteil, dass auch bei relativ "weichen" bzw. flexiblen Gehäusebauteilen die Gefahr von gehäuseverformungsbedingten Undichtigkeiten minimiert ist.

In einer vorteilhaften Weiterbildung der Flüssigkeitspumpe können Polbleche des Stators in dem aus einem Kunststoffmaterial bestehenden Statorgehäuseabschnitt durch Kunststoffumspritzen eingebettet sein. Hierdurch wird eine optimale Wärmeableitung von der Motorwicklung und den Polblechen in den Flüssigkeitsraum ermöglicht. Zugleich wird die Motorwicklung durch den umspritzten Kunststoff elektrisch isoliert.

Im weiteren Verfolg des Erfindungsgedankens kann in dem Gehäuse der Flüssigkeitspumpe ein Temperatursensor vorzugsweise nahe dem Flüssigkeitsausgang integriert, insbesondere in einer Aufnahmeaussparung im Statorgehäuseabschnitt aufgenommen sein, wodurch sich ein externer Temperatursensor und der damit verbundene (Montage)Aufwand jedenfalls erübrigen. Durch Erfassung der Temperatur der geförderten Flüssigkeit kann auf deren Viskosität - die im Falle von Öl für dessen Schmierwirkung wesentlich ist - sowie einen Kühlungsbedarf zurückgeschlossen und die Drehzahl des Elektromotors geeignet gesteuert werden, wobei z.B. tendenziell höhere Temperaturen einen größeren Kühlungsbedarf signalisieren und damit höhere Pumpendrehzahlen erfordern. Eine Platzierung des Temperatursensors nahe dem Flüssigkeitsausgang hat ferner den Vorteil, dass die dort erfasste Temperatur für die Eigenschaften der von der Pumpe abgegebenen Flüssigkeit am aussagekräftigsten ist; zudem besteht am Flüssigkeitsausgang infolge der dort im Förderfalle gegebenen Flüssigkeitsströmung keine Gefahr einer wärmestaubedingten Falscherfassung.

Des Weiteren ist im Gehäuse eine Elektronikplatine integriert, welche zumindest die für die elektronische Kommutierung des Elektromotors benötigten elektronischen Bauteile sowie ggf. die Sensorelemente tragen kann und zu der die elektrischen Teile der Flüs-sigkeitspumpe über Press-Fit-Verbindungen kontaktiert sind. Gegenüberebenfalls denkbaren - Schweiß- oder Lötverbindungen sind Press-Fit-Verbindungen mitweni-ger Aufwand herzustellen.

In einer bevorzugten, ebenfalls besonders kompakten Ausgestaltung der Flüssigkeitspumpe kann ferner der Flüssigkeitseingang des Gehäuses quer zur Drehachse des Rotors ausgerichtet sein. Ein solcher radialer Zulauf für die zu fördernde Flüssigkeit funktioniert auch bei einem sehr niedrigen Flüssigkeitsstand problemlos, ohne Luftansaugung.

Weiterhin kann vorgesehen sein, dass der Rotor einen mit der Motorwicklung zusammenwirkenden permanentmagnetischen äußeren Zylinderabschnitt sowie einen auf der vom Gehäuseabsatz des Statorgehäuseabschnitts abgewandten Seite als Flügelrad ausgebildeten Bodenabschnitt besitzt und aus einem kunststoffgebundenen Magnetmaterial direkt auf eine im Gehäuse drehbar gelagerte Rotorwelle aufgespritzt ist. Zum einen ist ein solcher Rotor besonders kostengünstig herstellbar. Zum anderen hat eine solche Wellenlösung - gegenüber einer grundsätzlich ebenfalls denkbaren Achsenlösung, bei der der Rotor auf einer gehäusefesten Achse dreht - Vorteile dahingehend, dass ein Lagerschaft od.dgl. am Rotor zur Bereitstellung einer ausreichenden Abstützlänge entbehrlich ist, was wiederum einer kurzen Baulänge zugutekommt, und die drehende Lagerung der Rotorwelle im Gehäuse zu weiter auseinanderliegenden Lagerstellen führt, was einem guten Rundlauf des Rotors förderlich ist.

Die Lagerstellen können hierbei schließlich prinzipiell durch im Gehäuse eingelassene Lagerbuchsen od.dgl. ausgebildet sein.

Im Hinblick auf geringe Kosten bevorzugt ist es indes, wenn die Rotorwelle zu beiden Seiten des Bodenabschnitts wenigstens radial unmittelbar im Gehäuse gelagert ist, nämlich einerseits im Gehäuseabsatz des Statorgehäuseabschnitts und andererseits in einem Lagerfortsatz des Pumpengehäuseabschnitts.

### KURZE BESCHREIBUNG DER ZEICHNUNGEN

Im Folgenden wird die Erfindung anhand bevorzugter Ausführungsbeispiele unter Bezugnahme auf die beigefügten, z.T. schematischen Zeichnungen näher erläutert, in denen zur Vereinfachung der Darstellung elastomere bzw. elastische Teile im unverformten Zustand dargestellt sind. In den Zeichnungen zeigen:
- Fig. 1: eine perspektivische Ansicht einer elektromotorisch angetriebenen Flüssigkeitspumpe nach einem bevorzugten ersten Ausführungsbeispiel der Erfindung im nicht-montierten Zustand von schräg oben / vorne links mit Blick auf eine pumpenäußere Flanschfläche zur Befestigung an einem Flüssigkeitsbehälter, wie z.B. einem Getriebegehäuse;
- Fig. 2: eine Draufsicht auf die Flüssigkeitspumpe gemäß Fig. 1 von oben in Fig. 1;
- Fig. 3: eine gegenüber dem Maßstab der Fig. 2 vergrößerte Schnittansicht der Flüssigkeitspumpe gemäß Fig. 1 entsprechend der zweifach versetzten Schnittverlaufslinie III-III in Fig. 2 in einem an einem abgebrochen dargestellten Getriebegehäuse montierten Zustand;
- Fig. 4: eine nochmals vergrößerte Teilschnittansicht der Flüssigkeitspumpe gemäß Fig. 1 entsprechend dem Detailkreis IV in Fig. 3, zur besseren Illustration eines umlaufenden Dichtelements mit Dreifachfunktion;
- Fig. 5: eine gegenüber dem Maßstab der Fig. 2 vergrößerte Schnittansicht der Flüssigkeitspumpe gemäß Fig. 1 entsprechend der Schnittverlaufslinie V-V in Fig. 2;
- Fig. 6: eine gegenüber dem Maßstab der Fig. 3 vergrößerte Schnittansicht der Flüssigkeitspumpe gemäß Fig. 1 entsprechend der zweifach versetzten Schnittverlaufslinie VI-VI in Fig. 3, im Gegensatz zu Fig. 3 aber im nichtmontierten Zustand, d.h. ohne Getriebegehäuse und Befestigungsmittel; und
- Fig. 7: eine Längsschnittansicht einer elektromotorisch angetriebenen Flüssigkeitspumpe nach einem zweiten Ausführungsbeispiel der Erfindung.

### DETAILLIERTE BESCHREIBUNG DER AUSFÜHRUNGSBEISPIELE

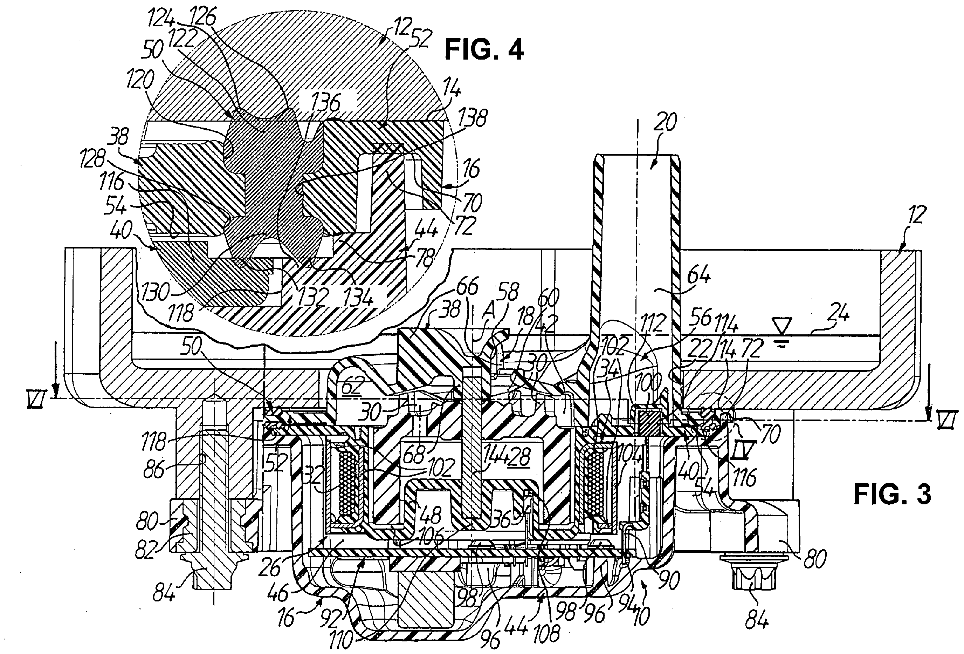

In den Figuren beziffert das Bezugszeichen 10 allgemein eine elektromotorisch angetriebene Flüssigkeitspumpe zur Zwangsschmierung eines Schaltgetriebes für Kraftfahrzeuge, von dem lediglich in Fig. 3 ein unterer Teil, nämlich ein (auch) als Flüssigkeitsbehälter dienendes Getriebegehäuse 12 abgebrochen dargestellt ist. An dem Getriebegehäuse 12 ist die Flüssigkeitspumpe 10 von außen montiert, genauer über eine pumpenäußere Flanschfläche 14 eines Gehäuses 16 der Flüssigkeitspumpe 10 angeflanscht, so dass ein Flüssigkeitseingang 18 und ein Flüssigkeitsausgang 20 der Flüssigkeitspumpe 10 durch eine Öffnung 22 im Getriebegehäuse 12 in das Getriebegehäuse 12 hineinragen. Während sich der Flüssigkeitseingang 18 unterhalb eines in Fig. 3 durch eine horizontale Linie bei 24 angedeuteten Getriebeöl-Füllstands im Getriebegehäuse 12 befindet, erstreckt sich der Flüssigkeitsausgang 20 über den Getriebeöl-Füllstand 24 nach oben hinaus, wo er auf hier nicht gezeigte Weise mit einem Verteilersystem (nicht dargestellt) für das Getriebeöl fluidverbunden ist.

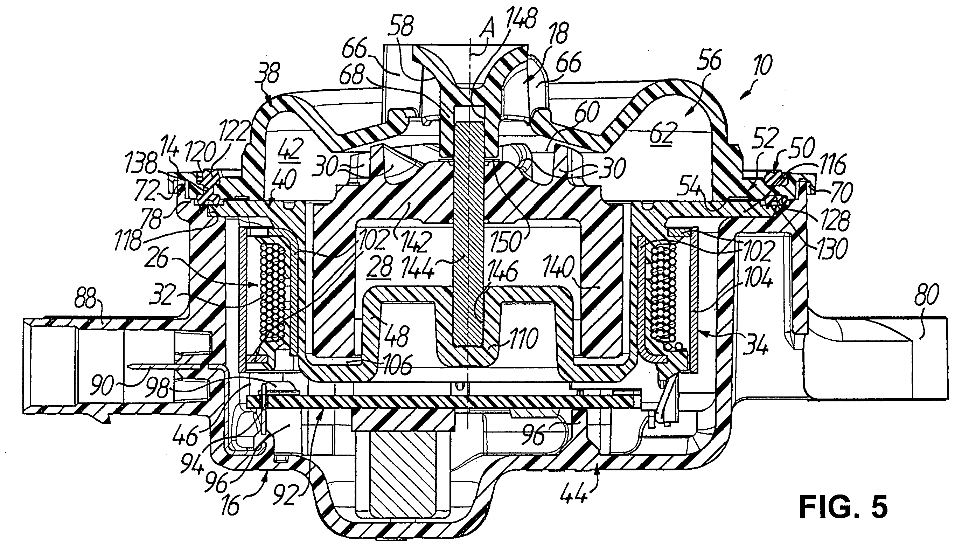

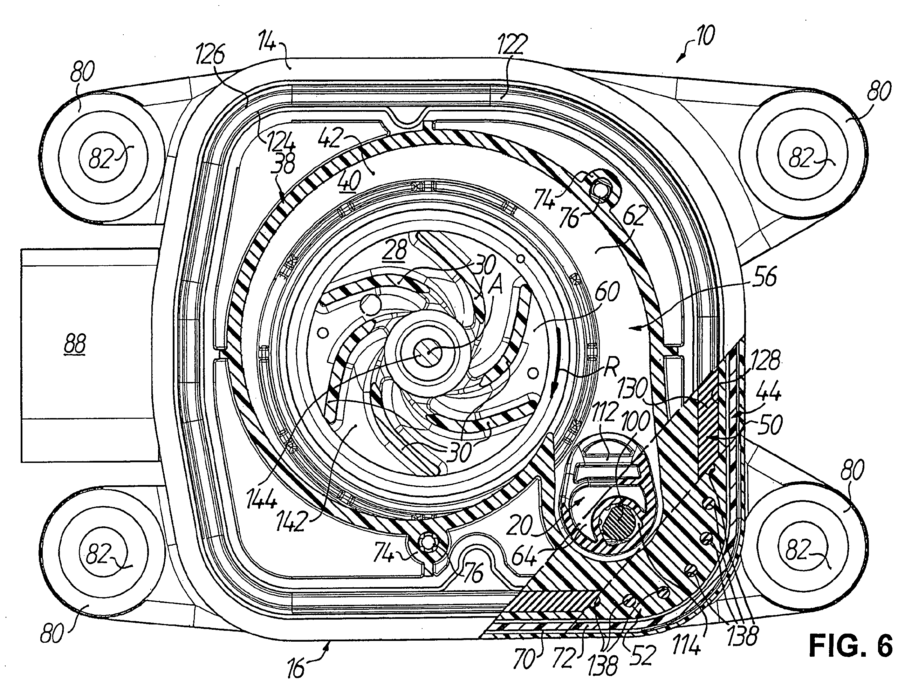

Im Gehäuse 16 ist ein elektronisch kommutierter Elektromotor 26 aufgenommen (siehe die Fig. 3 und 5), der einen um eine Drehachse A drehbaren, im Wesentlichen becherförmigen, magnetischen Rotor 28, welcher stirnseitig mit einer Mehrzahl von gekrümmten Schaufelfortsätzen 30 (vgl. insbesondere Fig. 6) als Mitteln zur Flüssigkeitsförderung versehen ist, einen eine Motorwicklung 32 aufweisenden Stator 34 sowie einen in an sich bekannter Weise für die elektronische Kommutierung benötigten Magnetfeldsensor 36 zur Drehwinkel-Lageerkennung des Rotors 28 umfasst (siehe Fig. 3). Hierbei ist das Gehäuse 16 mehrteilig, genauer dreiteilig ausgebildet, mit einem oberen Pumpengehäuseabschnitt 38, der den Flüssigkeitseingang 18 und den Flüssigkeitsausgang 20 aufweist, einem mittigen Statorgehäuseabschnitt 40, welcher den ringförmigen Stator 34 trägt, so dass dieser den Rotor 28 in bezüglich der Drehachse A koaxialer Anordnung entlang der Drehachse A gesehen wenigstens teilweise umgibt, und zusammen mit dem Pumpengehäuseabschnitt 38 einen Flüssigkeitsraum 42 begrenzt, in dem der Rotor 28 mit seinen Schaufelfortsätzen 30 angeordnet ist, und einem unteren Motorgehäuseabschnitt 44, der zusammen mit dem Statorgehäuseabschnitt 40 einen Elektronikraum 46 begrenzt, in dem sich u.a. der Stator 34 befindet.

In besonders kompakter Ausgestaltung erstreckt sich der Statorgehäuseabschnitt 40 entlang der Drehachse A gesehen in den Rotor 28 mit einem Gehäuseabsatz 48 hinein, welcher zur Aufnahme des Magnetfeldsensors 36 ausgebildet ist. Darüber hinaus ist, wie nachfolgend ebenfalls noch detailliert beschrieben werden wird, am Gehäuse 16 ein Dichtelement 50 vorgesehen, welches in einer Dreifachfunktion zugleich an der pumpenäußeren Flanschfläche 14 des Gehäuses 16 gegenüber dem Getriebegehäuse 12 abdichtet, den Flüssigkeitsraum 42 vom Elektronikraum 46 trennt und den Elektronikraum 46 zur Umgebung hin abdichtet.

Weitere Details zu dem als Kunststoffteil aus einem lasertransparenten, glasfaserverstärkten Polyphtalamid (PPA 35 GF) ausgeführten Pumpengehäuseabschnitt 38 sind insbesondere den Fig. 3, 5 und 6 zu entnehmen. Demgemäß weist der Pumpengehäuseabschnitt 38 radial außen einen Pumpengehäuseflansch 52 auf, an dem auf gegenüberliegenden Seiten die pumpenäußere Flanschfläche 14 und eine pumpeninnere Flanschfläche 54 ausgebildet sind. An dem Pumpengehäuseflansch 52 des Pumpengehäuseabschnitts 38 ist das aus einem elastomeren Material bestehende Dichtelement 50 auf noch zu beschreibende Weise befestigt.

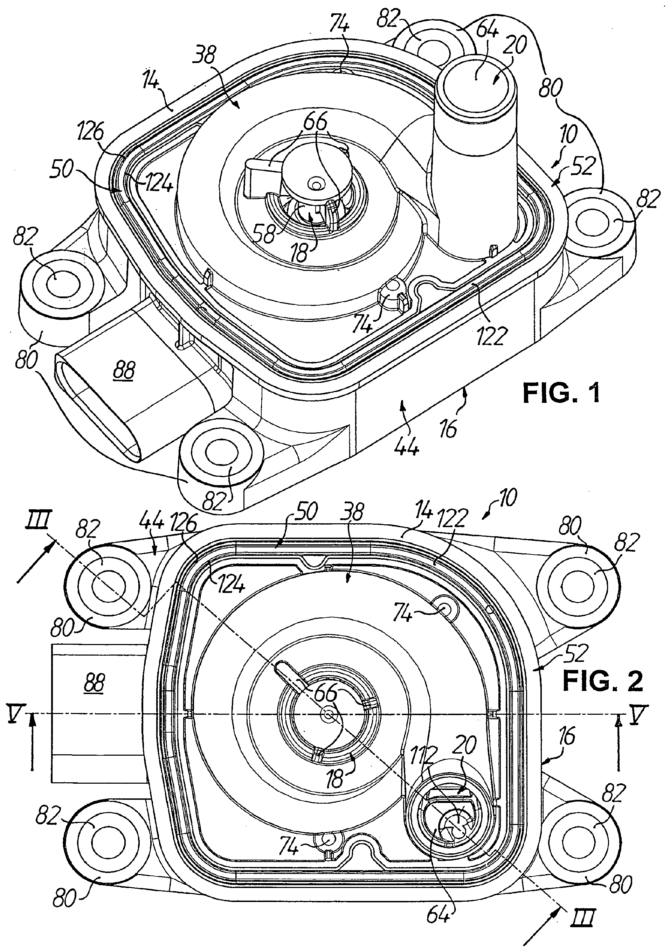

Radial innerhalb des Pumpengehäuseflansches 52 ist der Pumpengehäuseabschnitt 38 domartig erhaben ausgebildet und begrenzt, z.T. zusammen mit dem Rotor 28 und dem Statorgehäuseabschnitt 40, im Bereich des Flüssigkeitsraums 42 einen Pumpenkanal 56, der im Wesentlichen in vier Bereiche unterteilt werden kann, nämlich - von radial innen nach radial außen gesehen - (1.) einen zentralen, d.h. bezüglich der Drehachse A zentrierten, im Wesentlichen trichterförmigen Eingangsbereich 58 (siehe insbesondere Fig. 5), (2.) einen mittleren, im Wesentlichen ringförmigen Beschleunigungsbereich 60, in dem sich im Betrieb der Flüssigkeitspumpe 10 die Schaufelfortsätze 30 des Rotors 28 bewegen, und (3.) einen im Wesentlichen schneckenförmigen Förderbereich 62 (siehe hierzu auch die Fig. 1 und 2), welcher schließlich (4.) in einem rohrförmigen Ausgangsbereich 64 mündet, der sich an den Pumpengehäuseflansch 52 angrenzend im Wesentlichen parallel zur Drehachse A erstreckt. Der im Wesentlichen trichterförmige Eingangsbereich 58, welcher gegenüber dem mittleren Beschleunigungsbereich 60 des Pumpenkanals 56 axial vorsteht, bildet außenumfangsseitig den Flüssigkeitseingang 18 des Gehäuses 16, der somit im Wesentlichen quer zur Drehachse A des Rotors 28 ausgerichtet ist und über den - wie am besten in den Fig. 1 und 2 zu erkennen ist - fast vollumfänglich (annähernd 360°), d.h. nur durch drei in radialer Richtung verlaufende Stege 66 unterbrochen die Flüssigkeit (hier das Getriebeöl) in die Flüssigkeitspumpe 10 zulaufen kann. Im trichterförmigen Eingangsbereich 58 erfährt die Flüssigkeit sodann eine Strömungsumlenkung um 90° (von radial in Richtung der Drehachse A nach axial entlang der Drehachse A) bis sie auf den Rotor 28 mit seinen Schaufelfortsätzen 30 trifft, wo eine weitere Strömungsumlenkung um etwa 90° erfolgt (von axial entlang der Drehachse A nach radial weg von der Drehachse A). Im mittleren Beschleunigungsbereich 60 des Pumpenkanals 56, der im Schnitt (Fig. 3, 5) gesehen mit etwa konstantem Strömungsquerschnitt von dem Pumpengehäuseabschnitt 38 und dem Rotor 28 auf gegenüberliegenden Seiten in axialer Richtung begrenzt ist, wird die Flüssigkeit sodann infolge der Formgebung der Schaufelfortsätze 30 nach radial außen und in Umfangsrichtung entsprechend der Drehrichtung R des Rotors 28 (siehe Fig. 6) beschleunigt, worauf sie in den im Wesentlichen schneckenförmigen Förderbereich 62 gelangt. Im Förderbereich 62 des Pumpenkanals 56, der auf der einen axialen Seite von (eingangs) dem Rotor 28 und dem Statorgehäuseabschnitt 40 und auf der anderen axialen Seite sowie umfangsseitig von dem Pumpengehäuseabschnitt 38 mit sich in Drehrichtung R gesehen entsprechend dem Schneckenverlauf vergrößerndem Strömungsquerschnitt begrenzt ist, wird die Flüssigkeit sodann im Wesentlichen in Umfangsrichtung zum rohrförmigen Ausgangsbereich 64 gefördert. Eingangs des Ausgangsbereichs 64 erfolgt dann nochmals eine Strömungsumlenkung der Flüssigkeit um ca. 90° (von im Wesentlichen in Umfangsrichtung nach axial parallel zur Drehachse A), worauf die Flüssigkeit entlang des konstanten kreisförmigen Strömungsquerschnitts des Ausgangsbereichs 64 fließt, um schließlich über den vom Ausgangsbereich 64 gebildeten Flüssigkeitsausgang 20 von der Flüssigkeitspumpe 10 abgegeben zu werden.

Gemäß den Fig. 3 und 5 besitzt der Pumpengehäuseabschnitt 38 ferner an zentraler Stelle, d.h. dem Eingangsbereich 58 angrenzend einen Lagerfortsatz 68 zur noch zu beschreibenden Lagerung des Rotors 28. Was die Verbindung des spritzgegossenen Pumpengehäuseabschnitts 38 mit den anderen Teilen des Gehäuses 16 angeht, bliebe zum Pumpengehäuseabschnitt 38 schließlich noch zu erwähnen, dass der Pumpengehäuseflansch 52 radial außerhalb der pumpeninneren Flanschfläche 54 und an diese angrenzend mit einer umlaufenden Nut 70 zur Aufnahme eines in einer Draufsicht gesehen im Wesentlichen komplementär geformten, umlaufenden Bundes 72 am Motorgehäuseabschnitt 44 versehen ist. Darüber hinaus weist der Pumpengehäuseabschnitt 38 gemäß den Fig. 1, 2 und 6 bei 74 Aufnahmen (in Fig. 6 unten mittig mit Passloch und oben rechts mit Langloch) für am Statorgehäuseabschnitt 40 angeformte Positionierstifte 76 (siehe wiederum Fig. 6) auf, die dazu dienen, den Statorgehäuseabschnitt 40 bezüglich des Pumpengehäuseabschnitts 38 auszurichten.

Der ebenfalls als Kunststoffteil aus einem glasfaserverstärkten Polyphtalamid (PPA 50 GF) spritzgegossene Motorgehäuseabschnitt 44 ist mit dem Pumpengehäuseabschnitt 38 - mittelbar über den Statorgehäuseabschnitt 40 geeignet ausgerichtet - laserverschweißt, und zwar umlaufend mit seinem Bund 72 in der Nut 70 des Pumpengehäuseflansches 52 (in Fig. 4 durch die Kreuzschraffur am Grund der Nut 70 angedeutet). Dabei stützt sich gemäß den Fig. 4 und 5 der Pumpengehäuseabschnitt 38 über die pumpeninnere Flanschfläche 54 des Pumpengehäuseflansches 52 an einer umlaufenden, sich an den Bund 72 nach radial innen anschließenden Schulter 78 des Motorgehäuseabschnitts 44 ab.

Radial außen weist der Motorgehäuseabschnitt 44 im dargestellten Ausführungsbeispiel vier Befestigungsaugen 80 auf, die jeweils mit einer formschlüssig umspritzten, metallischen Hülse 82 ausgekleidet sind. Wie in Fig. 3 dargestellt ist werden die Hülsen 82 im montierten Zustand der Flüssigkeitspumpe 10 von Kopfschrauben 84 durchgriffen, die in jeweils zugeordneten, um die Öffnung 22 herum verteilten Gewindebohrungen 86 im Getriebegehäuse 12 eingeschraubt sind, um die Flüssigkeitspumpe 10 von außen am Getriebegehäuse 12 zu befestigen und dabei auch die einzelnen Teile des Gehäuses 16 fest miteinander zu verbinden. Die oben angesprochene Schweißverbindung zwischen Pumpengehäuseabschnitt 38 und Motorgehäuseabschnitt 44 dient demgegenüber vornehmlich als Transportsicherung.

Zwischen den in den Fig. 1, 2 und 6 linken Befestigungsaugen 80 ist der Motorgehäuseabschnitt 44 mit einem Steckerkragen 88 für einen Elektroanschluss der Flüssigkeitspumpe 10 versehen. Im Schnitt gemäß Fig. 5 ist in diesem Zusammenhang exemplarisch zu erkennen, dass Elektroleiter 90 in dem Motorgehäuseabschnitt 44 eingelassen bzw. -gespritzt sind, die aus dem Bereich des Steckerkragens 88 in den Elektronikraum 46 hineinführen. Die Schnitte gemäß den Fig. 4 und 5 zeigen auch, dass in dem Elektronikraum 46 des Gehäuses 16 eine Elektronikplatine 92 mit an sich bekannten, zur Pumpensteuerung benötigten elektronischen Bauteilen integriert ist. Die Elektronikplatine 92 selbst ist über Press-Fit-Verbindungen, von denen in Fig. 5 eine Verbindung bei 94 gezeigt ist, zu den Elektroleitern 90 im Motorgehäuseabschnitt 44 kontaktiert und stützt sich auf am Motorgehäuseabschnitt 44 innen angeformten Vorsprüngen 96 ab, an denen die Elektronikplatine 92 zudem z.T. mittels Schrauben 98 befestigt ist. Analog den Positionierstiften 76 zum Pumpengehäuseabschnitt 38 hat der Statorgehäuseabschnitt 40 auch nach in den Fig. 3 und 5 unten Positionierstifte (hier nicht zu sehen), die in zugeordnete Löcher (Passloch und Langloch; in den Figuren nicht gezeigt) im Motorgehäuseabschnitt 44 eingreifen und sich dabei durch entsprechende Löcher (nicht dargestellt) in der Elektronikplatine 92 hindurcherstrecken. Die elektrischen Teile der Flüssigkeitspumpe 10 sind ebenfalls über Press-Fit-Verbindungen 94 zu der Elektronikplatine 92 kontaktiert; hiervon ist lediglich in Fig. 3 beispielhaft die Press-Fit-Verbindung 94 zu einem im Statorgehäuseabschnitt 40 eingelassen bzw. -gespritzten weiteren Elektroleiter 90 gezeigt, an dem ein Temperatursensor 100 angeschlossen ist. Entsprechende elektrische Verbindungen (nicht näher gezeigt) bestehen zur Motorwicklung 32 und zum Magnetfeldsensor 36.

Auch der Statorgehäuseabschnitt 40 ist als Kunststoffteil aus einem glasfaserverstärkten Polyphtalamid (PPA 50 GF) spritzgegossen. Hierbei werden sowohl besagte Elektroleiter 90 als auch Polbleche 102 des Stators 34 durch Umspritzen mit dem Kunststoffmaterial des Statorgehäuseabschnitts 40 eingebettet. Erst nach dem Spritzgießvorgang wird die Motorwicklung 32 aufgebracht, die in kostengünstiger Weise als orthogonale Lagenwicklung ausgeführt ist. Vervollständigt wird der Stator 34 durch einen geschlitzten (nicht gezeigt), metallischen Rückschlussring 104, der auf nach radial außen vorstehende Ränder der Polbleche 102 kraftschlüssig aufgezogen und zudem mit den Rändern der Polbleche 102 verkrimpt wird (in den Figuren nicht sichtbar).

Der den Stator 34 tragende Bereich des Statorgehäuseabschnitts 40 umgibt den zentralen Gehäuseabsatz 48 des Statorgehäuseabschnitts 40 in bezüglich der Drehachse A koaxialer Lagebeziehung unter Belassung eines Ringraums 106, in den der Rotor 28 eintaucht. An einer radial außen liegenden Stelle des Gehäuseabsatzes 48, d.h. mit radialem Abstand zur Drehachse A ist dieser gemäß Fig. 3 mit einer zum Motorgehäuseabschnitt 44 hin offenen Aussparung 108 zur Aufnahme des Magnetfeldsensors 36 - bei dem es sich z.B. um ein Hallelement handeln kann - versehen. Gemäß den Fig. 3 und 5 ist an dem im dargestellten Ausführungsbeispiel im Wesentlichen becherförmigen Gehäuseabsatz 48 des Statorgehäuseabschnitts 40 auf der vom Pumpengehäuseabschnitt 38 abgewandten Seite ferner an mittiger Stelle ein weiterer Lagerfortsatz 110 für die Lagerung des Rotors 28 vorgesehen. Somit liegen die Aussparung 108 zur Aufnahme des Magnetfeldsensors 36 und die durch den Lagerfortsatz 110 gebildete Lagerstelle innerhalb des Rotors 28 beabstandet aber nebeneinander in einer Ebene, die quer zur Drehachse A verläuft. Auch diese "radiale Nebeneinanderanordnung" besagter Funktionselemente ist der flachen Bauform der Flüssigkeitspumpe 10 förderlich. Darüber hinaus ist der Magnetfeldsensor 36 nahe der Außenwand des Rotors 28 angeordnet, was aufgrund des maximal großen Abstands zur Drehachse A einerseits und der Nähe zum Rotor 28 andererseits einer guten Qualität des erfassten Signals zuträglich ist.

Gemäß den Fig. 2, 3 und 6 ragt des Weiteren ein Teilbereich 112 des Statorgehäuseabschnitts 40 in radialer Richtung gesehen an den Stator 34 angrenzend und axial in Richtung des Pumpengehäuseabschnitts 38 rampenartig über den übrigen Statorgehäuseabschnitt 40 vor und bildet somit einen Strömungsverluste reduzierenden, "weichen" Übergang zwischen dem schneckenförmigen Förderbereich 62 und dem rohrförmigen Ausgangsbereich 64 des Pumpenkanals 56. Dieser Teilbereich 112 des Statorgehäuseabschnitts 40 ist gemäß den Fig. 3 und 6 mit einer zum Motorgehäuseabschnitt 44 hin offenen Aufnahmeaussparung 114 für den Temperatursensor 100 versehen, so dass Letzterer nahe dem Flüssigkeitsausgang 20 in dem Gehäuse 16 der Flüssigkeitspumpe 10 integriert ist.

Radial außen weist der Statorgehäuseabschnitt 40 schließlich einen Statorgehäuseflansch 116 auf, der zwischen dem Pumpengehäuseabschnitt 38 und dem Motorgehäuseabschnitt 44 sandwichartig eingespannt ist und den Statorgehäuseabschnitt 40 in einem zugeordneten Absatz 118 am Motorgehäuseabschnitt 44 bezüglich der Drehachse A radial mit zentriert.

Weitere Details zu dem umlaufenden, zur Vereinfachung der Darstellung unverformt gezeigten Dichtelement 50 sind insbesondere den Fig. 4 und 6 zu entnehmen. Demgemäß ist der Pumpengehäuseflansch 52 des Pumpengehäuseabschnitts 38 ausgehend von der pumpenäußeren Flanschfläche 14 des Gehäuses 16 mit einer umlaufenden Vertiefung oder Nut 120 zur Aufnahme eines ersten Dichtabschnitts 122 des Dichtelements 50 versehen, der mit zwei Dichtlippen 124, 126, d.h. einer radial inneren Dichtlippe 124 und einer radial äußeren Dichtlippe 126 über die pumpenäußere Flanschfläche 14 vorsteht, um gegenüber dem Getriebegehäuse 12 abzudichten. Ferner ist der Pumpengehäuseflansch 52 ausgehend von der pumpeninneren Flanschfläche 54 mit einer weiteren umlaufenden Vertiefung oder Nut 128 zur Aufnahme eines zweiten Dichtabschnitts 130 des Dichtelements 50 versehen. Letzterer steht mit zwei Dichtlippen 132, 134 über die pumpeninnere Flanschfläche 54 vor, von denen die eine, radial innere Dichtlippe 132 mit dem Statorgehäuseflansch 116 des Statorgehäuseabschnitts 40 zusammenwirkt, um den Flüssigkeitsraum 42 vom Elektronikraum 46 zu trennen. Die andere, radial äußere Dichtlippe 134 hingegen wirkt mit einer zugeordneten Schulter 136 des Motorgehäuseabschnitts 44 zusammen, um den Elektronikraum 46 zur Umgebung hin abzudichten. Dabei übergreift bzw. überdeckt der zweite Dichtabschnitt 130 des Dichtelements 50 den Zentrierbereich zwischen dem Statorgehäuseflansch 116 des Statorgehäuseabschnitts 40 und dem Absatz 118 am Motorgehäuseabschnitt 44 in bezogen auf die Drehachse A des Rotors 28 radialer Richtung, wobei infolge der Verformung der Dichtlippen 132, 134 auch eine definierte Vorspannkraft zwischen den einzelnen Teilen des Gehäuses 16 erzeugt wird.

Im dargestellten Ausführungsbeispiel ist das Dichtelement 50 am Pumpengehäuseflansch 52 des Pumpengehäuseabschnitts 38 formschlüssig angespritzt. Hierfür ist zwischen der umlaufenden Nut 120 an der pumpenäußeren Flanschfläche 14 und der umlaufenden Nut 128 an der pumpeninneren Flanschfläche 54 eine Mehrzahl von in Umfangsrichtung, d.h. entlang der Nuten 120, 128 gesehen vorzugsweise gleichmäßig beabstandeten Öffnungen 138 im Pumpengehäuseflansch 52 ausgebildet, welche die Nuten 120, 128 verbinden und mit dem elastomeren Material des Dichtelements 50 durchspritzt sind, um den ersten Dichtabschnitt 122 und den zweiten Dichtabschnitt 130 des Dichtelements 50 stoffschlüssig miteinander zu verbinden.

Weitere Einzelheiten zum Rotor 28 und dessen Lagerung im Gehäuse 16 zeigt schließlich insbesondere die Fig. 5. Der Rotor 28 besitzt einen mit der Motorwicklung 32 des Stators 34 in an sich bekannter Weise zusammenwirkenden permanentmagnetischen äußeren Zylinderabschnitt 140 sowie einen auf der vom Gehäuseabsatz 48 des Statorgehäuseabschnitts 40 abgewandten Seite mit den Schaufelfortsätzen 30 als Flügelrad ausgebildeten Bodenabschnitt 142 und besteht aus einem kunststoffgebundenen Magnetmaterial, welches direkt auf eine im Gehäuse 16 drehbar gelagerte, metallische (vorzugsweise Stahl) Rotorwelle 144 unter Formgebung auch der Schaufelfortsätze 30 aufgespritzt ist. Die Rotorwelle 144 ist zu beiden Seiten des Bodenabschnitts 142 radial unmittelbar, d.h. ohne Lagerbuchsen od.dgl. im Gehäuse 16 gelagert, nämlich einerseits in einer zylindrischen Aussparung 146 am Lagerfortsatz 110 im Gehäuseabsatz 48 des Statorgehäuseabschnitts 40 und andererseits in einer zylindrischen Aussparung 148 am Lagerfortsatz 68 des Pumpengehäuseabschnitts 38. Hierbei stützt sich die Rotorwelle 144 in Fig. 5 unten axial, d.h. stirnseitig am Grund der Aussparung 146 im Lagerfortsatz 110 ab. In Fig. 5 oben kann zwischen dem Bodenabschnitt 142 des Rotors 28 und dem Lagerfortsatz 68 eine die Rotorwelle 144 umgebende Anlaufscheibe 150 vorgesehen sein, über die sich der Rotor 28 im Betrieb der Flüssigkeitspumpe 10 axial am Lagerfortsatz 68 abstützt, wenn der Rotor 28 aufgrund der sich an ihm einstellenden Druckverhältnisse gegen die Schwerkraft angehoben wird.

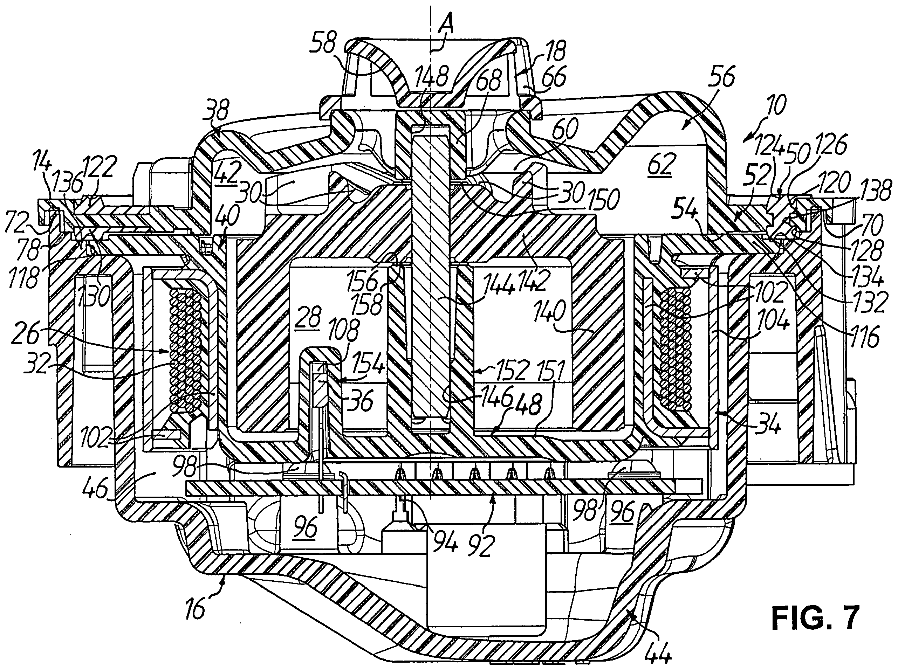

Nachfolgend soll die Flüssigkeitspumpe 10 nach dem zweiten Ausführungsbeispiel unter Bezugnahme auf die Fig. 7 nur insoweit beschrieben werden, als sie sich wesentlich von dem oben unter Bezugnahme auf die Fig. 1 bis 6 ausführlich beschriebenen ersten Ausführungsbeispiel unterscheidet. Hierbei beziffern gleiche Bezugszeichen Bauteile oder -gruppen des zweiten Ausführungsbeispiels, die denjenigen des ersten Ausführungsbeispiels gleichen oder entsprechen.

Die wesentlichen Unterschiede bestehen hier in der Ausbildung des Statorgehäuseabschnitts 40 im Bereich des Rotors 28 und der - in Fig. 7 unteren - Lagerung des Rotors 28 am Statorgehäuseabschnitt 40. Beim zweiten Ausführungsbeispiel ist der Gehäuseabsatz 48 nicht im Wesentlichen becherförmig ausgebildet, sondern besitzt zwei über eine in einer Draufsicht in Richtung der Drehachse A gesehen kreisförmige Basis 151 einstückig am Statorgehäuseabschnitt 40 angeformte Abschnitte, mit denen sich der Gehäuseabsatz 48 - wiederum entlang der Drehachse A gesehen - in den Rotor 28 hinein erstreckt, nämlich einen zentralen Lagerabschnitt 152 und einen bezüglich der Drehachse A radial vom Lagerabschnitt 152 beabstandeten Sensorabschnitt 154 in der Nähe des Zylinderabschnitts 140 des Rotors 28.

Der Lagerabschnitt 152 ist zum Rotor 28 hin offen und auf axialer Höhe des Sensorabschnitts 154 mit der zylindrischen Aussparung 146 zur unmittelbaren, radialen Lagerung der Rotorwelle 144 versehen. Die Rotorwelle 144 erstreckt sich hier allerdings nicht bis zum Grund oder Boden der zylindrischen Aussparung 146 im Lagerabschnitt 152, sondern endet vorher mit axialem Abstand hierzu. Dafür ist der Lagerabschnitt 152 länger ausgebildet als der Lagerfortsatz 110 beim ersten Ausführungsbeispiel und endet in Richtung der Drehachse A gesehen erst kurz vor dem Bodenabschnitt 142 des Rotors 28. Zwischen einer ringförmigen Stirnfläche 156 des Lagerabschnitts 152 und dem Bodenabschnitt 142 des Rotors 28 ist eine zweite, die Rotorwelle 144 umgebende Anlaufscheibe 158 eingefügt, über die sich der Rotor 28 am Lagerabschnitt 152 axial abstützen kann.

Der Sensorabschnitt 154 hingegen ist mit der zum Elektronikraum 46 bzw. zur Elektronikplatine 92 hin offenen Aussparung 108 zur Aufnahme des Magnetfeldsensors 36 versehen und erstreckt sich nur bis auf halbe Höhe des Zylinderabschnitts 140 des Rotors 28. Im Ergebnis sind auch bei diesem Ausführungsbeispiel der Magnetfeldsensor 36 und die radiale Lagerstelle für die Rotorwelle 144 auf der Seite des Statorgehäuseabschnitts 40 in sehr kompakter Bauform in einer Ebene im Rotor 28 angeordnet, die sich quer bzw. senkrecht zur Drehachse A erstreckt.

Eine elektromotorisch angetriebene Flüssigkeitspumpe, die zur Zwangsschmierung eines Schaltgetriebes für Kraftfahrzeuge einsetzbar ist, hat ein einen Flüssigkeitseingang und einen Flüssigkeitsausgang aufweisendes Gehäuse und einen darin aufgenommenen, elektronisch kommutierten Elektromotor. Letzterer umfasst einen um eine Drehachse drehbaren, im Wesentlichen becherförmigen, magnetischen Rotor mit Mitteln zur Flüssigkeitsförderung, einen ringförmigen, eine Motorwicklung aufweisenden Stator, welcher in bezüglich der Drehachse koaxialer Anordnung den Rotor entlang der Drehachse gesehen wenigstens teilweise umgibt, sowie einen Magnetfeldsensor zur Lageerkennung des Rotors. Das Gehäuse weist hierbei einen Statorgehäuseabschnitt auf, der den Stator trägt, diesen von einem Flüssigkeitsraum trennt, in dem der Rotor angeordnet ist, und sich entlang der Drehachse gesehen in den Rotor mit einem Gehäuseabsatz hinein erstreckt, welcher zur Aufnahme des Magnetfeldsensors ausgebildet ist, so dass die Flüssigkeitspumpe insgesamt nur eine geringe Bauhöhe besitzt.

### BEZUGSZEICHENLISTE

- 10: Flüssigkeitspumpe
- 12: Getriebegehäuse
- 14: pumpenäußere Flanschfläche
- 16: Gehäuse
- 18: Flüssigkeitseingang
- 20: Flüssigkeitsausgang
- 22: Öffnung
- 24: Getriebeöl-Füllstand
- 26: Elektromotor
- 28: Rotor
- 30: Schaufelfortsatz
- 32: Motorwicklung
- 34: Stator
- 36: Magnetfeldsensor
- 38: Pumpengehäuseabschnitt
- 40: Statorgehäuseabschnitt
- 42: Flüssigkeitsraum
- 44: Motorgehäuseabschnitt
- 46: Elektronikraum
- 48: Gehäuseabsatz
- 50: Dichtelement
- 52: Pumpengehäuseflansch
- 54: pumpeninnere Flanschfläche
- 56: Pumpenkanal
- 58: trichterförmiger Eingangsbereich
- 60: ringförmiger Beschleunigungsbereich
- 62: schneckenförmiger Förderbereich
- 64: rohrförmiger Ausgangsbereich
- 66: Steg
- 68: Lagerfortsatz
- 70: Nut
- 72: Bund
- 74: Aufnahme
- 76: Positionierstift
- 78: Schulter
- 80: Befestigungsauge
- 82: Hülse
- 84: Kopfschraube
- 86: Gewindebohrung
- 88: Steckerkragen
- 90: Elektroleiter
- 92: Elektronikplatine
- 94: Press-Fit-Verbindung
- 96: Vorsprung
- 98: Schraube
- 100: Temperatursensor
- 102: Polblech
- 104: Rückschlussring
- 106: Ringraum
- 108: Aussparung
- 110: Lagerfortsatz
- 112: Teilbereich
- 114: Aufnahmeaussparung
- 116: Statorgehäuseflansch
- 118: Absatz
- 120: Nut
- 122: erster Dichtabschnitt
- 124: Dichtlippe
- 126: Dichtlippe
- 128: Nut
- 130: zweiter Dichtabschnitt
- 132: Dichtlippe
- 134: Dichtlippe
- 136: Schulter
- 138: Öffnung
- 140: Zylinderabschnitt
- 142: Bodenabschnitt
- 144: Rotorwelle
- 146: Aussparung
- 148: Aussparung
- 150: Anlaufscheibe
- 151: Basis
- 152: Lagerabschnitt
- 154: Sensorabschnitt
- 156: Stirnfläche
- 158: Anlaufscheibe

- A: Drehachse
- R: Drehrichtung

## Patentansprüche

1. Elektromotorisch angetriebene Flüssigkeitspumpe (10), insbesondere zur Zwangsschmierung eines Schaltgetriebes für Kraftfahrzeuge, mit einem einen Flüssigkeitseingang (18) und einen Flüssigkeitsausgang (20) aufweisenden Gehäuse (16) und einem darin aufgenommenen, elektronisch kommutierten Elektromotor (26), der einen um eine Drehachse (A) drehbaren, im Wesentlichen becherförmigen, magnetischen Rotor (28) mit Mitteln (30) zur Flüssigkeitsförderung, einen ringförmigen, eine Motorwicklung (32) aufweisenden Stator (34), welcher in bezüglich der Drehachse (A) koaxialer Anordnung den Rotor (28) entlang der Drehachse (A) gesehen wenigstens teilweise umgibt, sowie einen Magnetfeldsensor (36) zur Lageerkennung des Rotors (28) besitzt, wobei das Gehäuse (16) einen Statorgehäuseabschnitt (40) aufweist, der den Stator (34) trägt, diesen von einem Flüssigkeitsraum (42) trennt, in dem der Rotor (28) angeordnet ist, und sich entlang der Drehachse (A) gesehen in den Rotor (28) mit einem Gehäuseabsatz (48) hinein erstreckt, **dadurch gekennzeichnet, dass** der Gehäuseabsatz (48) des Statorgehäuseabschnitts (40), der sich entlang der Drehachse (A) gesehen in den Rotor (28) hinein erstreckt, zur Aufnahme des Magnetfeldsensors (36) ausgebildet ist **und dass** im Gehäuse (16) eine Elektronikplatine (92) integriert ist, zu der die elektrischen Teile der Fiüssigkeitspumpe (10) über Press-Fit-Verbindurigen oder Schweiß- Lötverbindungen kontaktiert sind.

2. Flüssigkeitspumpe (10) nach Anspruch 1, **dadurch gekennzeichnet, dass** das Gehäuse (16) über eine pumpenäußere Flanschfläche (14) an einem Flüssigkeitsbehälter (12) anflanschbar ist und in mehrteiliger Ausbildung neben dem Statorgehäuseabschnitt (40) einen den Flüssigkeitseingang (18) und den Flüssigkeitsausgang (20) aufweisenden Pumpengehäuseabschnitt (38), welcher zusammen mit dem Statorgehäuseabschnitt (40) den Flüssigkeitsraum (42) begrenzt, und einen Motorgehäuseabschnitt (44) besitzt, der zusammen mit dem Statorgehäuseabschnitt (40) einen Elektronikraum (46) begrenzt, in dem sich wenigstens der Stator (34) befindet.

3. Flüssigkeitspumpe (10) nach Anspruch 2, **dadurch gekennzeichnet, dass** der Pumpengehäuseabschnitt (38) und der Motorgehäuseabschnitt (44) als Kunststoffteile ausgeführt und miteinander verschweißt sind.

4. Flüssigkeitspumpe (10) nach Anspruch 2 oder 3, **dadurch gekennzeichnet, dass** der Statorgehäuseabschnitt (40) einen Statorgehäuseflansch (116) aufweist, der zwischen dem Pumpengehäuseabschnitt (38) und dem Motorgehäuseabschnitt (44) eingespannt ist und den Statorgehäuseabschnitt (40) am Motorgehäuseabschnitt (44) bezüglich der Drehachse (A) zentriert.

5. Flüssigkeitspumpe (10) nach einem der Ansprüche 2 bis 4, **dadurch gekennzeichnet, dass** ein Dichtelement (50) vorgesehen ist, welches zugleich an der pumpenäußeren Flanschfläche (14) des Gehäuses (16) gegenüber dem Flüssigkeitsbehälter (12) abdichtet, den Flüssigkeitsraum (42) vom Elektronikraum (46) trennt und den Elektronikraum (46) zur Umgebung hin abdichtet.

6. Flüssigkeitspumpe (10) nach Anspruch 5, **dadurch gekennzeichnet, dass** die pumpenäußere Flanschfläche (14) des Gehäuses (16) mit einer umlaufenden Nut (120) zur Aufnahme eines ersten Dichtabschnitts (122) des Dichtelements (50) versehen ist, der mit zwei Dichtlippen (124, 126) über die pumpenäußere Flanschfläche (14) vorsteht, um gegenüber dem Flüssigkeitsbehälter (12) abzudichten.

7. Flüssigkeitspumpe (10) nach Anspruch 5 oder 6, **dadurch gekennzeichnet, dass** der Pumpengehäuseabschnitt (38) einen Pumpengehäuseflansch (52) aufweist, an dem auf gegenüberliegenden Seiten die pumpenäußere Flanschfläche (14) und eine pumpeninnere Flanschfläche (54) ausgebildet sind, die mit einer umlaufenden Nut (128) zur Aufnahme eines zweiten Dichtabschnitts (130) des Dichtelements (50) versehen ist, der mit zwei Dichtlippen (132, 134) über die pumpeninnere Flanschfläche (54) vorsteht, von denen die eine Dichtlippe (132) mit dem Statorgehäuseabschnitt (40) zusammenwirkt, um den Flüssigkeitsraum (42) vom Elektronikraum (46) zu trennen, während die andere Dichtlippe (134) mit dem Motorgehäuseabschnitt (44) zusammenwirkt, um den Elektronikraum (46) zur Umgebung hin abzudichten.

8. Flüssigkeitspumpe (10) nach einem der Ansprüche 5 bis 7, **dadurch gekennzeichnet, dass** das aus einem elastomeren Material bestehende Dichtelement (50) am Pumpengehäuseabschnitt (38) befestigt, insbesondere an dem Pumpengehäuseabschnitt (38) formschlüssig angespritzt ist.

9. Flüssigkeitspumpe (10) nach den Ansprüchen 6 bis 8, **dadurch gekennzeichnet, dass** zwischen der umlaufenden Nut (120) an der pumpenäußeren Flanschfläche (14) und der umlaufenden Nut (128) an der pumpeninneren Flanschfläche (54) eine Mehrzahl von in Umfangsrichtung beabstandeten Öffnungen (138) vorgesehen ist, die mit dem elastomeren Material des Dichtelements (50) durchspritzt sind, um den ersten Dichtabschnitt (122) und den zweiten Dichtabschnitt (130) des Dichtelements (50) miteinander zu verbinden.

10. Flüssigkeitspumpe (10) nach einem der vorhergehenden Ansprüche, **dadurch gekennzeichnet, dass** Polbleche (102) des Stators (34) in dem aus einem Kunststoffmaterial bestehenden Statorgehäuseabschnitt (40) durch Kunststoffumspritzen eingebettet sind.

11. Flüssigkeitspumpe (10) nach einem der vorhergehenden Ansprüche, **dadurch gekennzeichnet, dass** in dem Gehäuse (16) ein Temperatursensor (100) vorzugsweise nahe dem Flüssigkeitsausgang (20) integriert, insbesondere in einer Aufnahmeaussparung (114) im Statorgehäuseabschnitt (40) aufgenommen ist.

12. Flüssigkeitspumpe (10) nach einem der vorhergehenden Ansprüche, **dadurch gekennzeichnet, dass** der Flüssigkeitseingang (18) des Gehäuses (16) quer zur Drehachse (A) des Rotors (28) ausgerichtet ist.

13. Flüssigkeitspumpe (10) nach einem der vorhergehenden Ansprüche, **dadurch gekennzeichnet, dass** der Rotor (28) einen mit der Motorwicklung (32) zusammenwirkenden permanentmagnetischen äußeren Zylinderabschnitt (140) sowie einen auf der vom Gehäuseabsatz (48) des Statorgehäuseabschnitts (40) abgewandten Seite als Flügelrad ausgebildeten Bodenabschnitt (142) besitzt und aus einem kunststoffgebundenen Magnetmaterial direkt auf eine im Gehäuse (16) drehbar gelagerte Rotorwelle (144) aufgespritzt ist.

14. Flüssigkeitspumpe (10) nach Anspruch 13, **dadurch gekennzeichnet, dass** die Rotorwelle (144) zu beiden Seiten des Bodenabschnitts (142) wenigstens radial unmittelbar im Gehäuse (16) gelagert ist, nämlich einerseits im Gehäuseabsatz (48) des Statorgehäuseabschnitts (40) und andererseits in einem Lagerfortsatz (68) des Pumpengehäuseabschnitts (38).

## Claims

1. Electric motor driven liquid pump (10), particularly for forced lubrication of a manual transmission for motor vehicles, comprising a housing (16), which has a liquid inlet (18) and a liquid outlet (20), and an electronically commutated electric motor (26), which is received therein and which comprises a substantially cup-shaped magnetic rotor (28) with means (30) for conveying liquid, the rotor being rotatable about an axis (A) of rotation, an annular stator (34) having a motor winding (32) and at least partly enclosing the rotor (28) in coaxial arrangement with respect to the axis (A) of rotation as seen along the axis (A) of rotation, and a magnetic field sensor (36) for recognition of the position of the rotor (28), wherein the housing (16) has a stator housing section (40) which carries the stator (34), separates this from a liquid chamber (42) in which the rotor is arranged (28), and as seen along the axis (A) of rotation extends into the rotor (28) by a housing offset (48), **characterized in that** the housing offset (48) of the stator housing section (40), which as seen along the axis (A) of rotation extends into the rotor (28), is formed to receive the magnetic field sensor (36) **and in that** an electronic circuit board (92) with which the electrical parts of the liquid pump (10) are contacted by way of press-fit or welded or soldered connections is integrated in the housing (16).

2. Liquid pump (10) according to claim 1, **characterized in that** the housing (16) can be flange-mounted on a liquid container (12) by way of a flange surface (14) external to the pump and comprises in multi-part construction in addition to the stator housing section (40) a pump housing section (38), which has the liquid inlet (18) and the liquid outlet (20) and which together with the stator housing section (40) bounds the liquid chamber (42), and a motor housing section (44), which together with the stator housing section (40) bounds an electronics chamber (46) in which at least the stator (34) is located.

3. Liquid pump (10) according to claim 2, **characterized in that** the pump housing section (38) and the motor housing section (44) are constructed as plastics material parts and are welded together.

4. Liquid pump (10) according to claim 2 or 3, **characterized in that** the stator housing section (40) has a stator housing flange (116) which is clamped in place between the pump housing section (38) and the motor housing section (44) and centers the stator housing section (40) at the motor housing section (44) with respect to the axis (A) of rotation.

5. Liquid pump (10) according to any one of claims 2 to 4, **characterized in that** a sealing element (50) is provided, which sealing element simultaneously seals the flange surface (14), which is external to the pump, of the housing (16) relative to the liquid container (12), separates the liquid chamber (42) from the electronics chamber (46) and seals the electronics chamber (46) relative to the environment.

6. Liquid pump (10) according to claim 5, **characterized in that** the flange surface (14), which is external to the pump, of the housing (16) is provided with an encircling groove (120) for reception of a first sealing section (122) of the sealing element (50), which protrudes by two sealing lips (124, 126) beyond the flange surface (14) external to the pump so as to seal relative to the liquid container (12).

7. Liquid pump (10) according to claim 5 or 6, **characterized in that** the pump housing section (38) has a pump housing flange (52) at which the flange surface (14) external to the pump and a flange surface (54) internal to the pump are formed on opposite sides, the flange surface internal to the pump being provided with an encircling groove (128) for reception of a second sealing section (130) of the sealing element (50), which protrudes by two sealing lips (132, 134) beyond the flange surface (54) internal to the pump, one sealing lip (132) co-operating with the stator housing section (40) so as to separate the liquid chamber (42) from the electronics chamber (46) and the other sealing lip (134) co-operating with the motor housing section (44) so as to seal the electronics chamber (46) relative to the environment.

8. Liquid pump (10) according to any one of claims 5 to 7, **characterized in that** the sealing element (50) consisting of an elastomeric material is attached to the pump housing section (38), in particular injection molded at the pump housing section (38) to interlock therewith.

9. Liquid pump (10) according to any one of claims 6 to 8, **characterized in that** a plurality of openings (138) spaced apart in circumferential direction is provided between the encircling groove (120) at the flange surface (14) external to the pump and the encircling groove (128) at the flange surface (54) internal to the pump, the elastomeric material of the sealing element (50) being injection-molded through the openings so as to interconnect the first sealing section (122) and the second sealing section (130) of the sealing element (50).

10. Liquid pump (10) according to any one of the preceding claims, **characterized in that** pole sheets (102) of the stator (34) are embedded in the stator housing section (40), which consists of plastics material, by injection-molding encapsulation with plastics material.

11. Liquid pump (10) according to any one of the preceding claims, **characterized in that** a temperature sensor (100) is integrated in the housing (16) preferably near the liquid outlet (20), in particular is received in a receiving recess (114) in the stator housing section (40).

12. Liquid pump (10) according to any one of the preceding claims, **characterized in that** the liquid inlet (18) of the housing (16) is oriented transversely to the axis (A) of rotation of the rotor (28).

13. Liquid pump (10) according to any one of the preceding claims, **characterized in that** the rotor (28) has a permanently magnetic outer cylinder section (140) co-operating with the motor winding (32) and a base section (142), which is constructed as an impeller on the side remote from the housing offset (48) of the stator housing section (40) and is injection-molded from a magnetic material, which is incorporated in plastics material, directly on a rotor shaft (144) rotatably mounted in the housing (16).

14. Liquid pump (10) according to claim 13, **characterized in that** the rotor shaft (144) is mounted on either side of the base section (142) at least radially directly in the housing (16), in particular on the one hand in the housing offset (48) of the stator housing section (40) and on the other hand in a bearing projection (68) of the pump housing section (38).

## Revendications

1. Pompe à liquides (10) entrainée par moteur électrique, notamment destinée à la lubrification forcée d'une boite de vitesses pour véhicules automobiles, comprenant un carter (16), qui possède une entrée de liquide (18) et une sortie de liquide (20), et dans lequel est reçu un moteur électrique (26) à commutation électronique, qui possède un rotor magnétique (28) avec des moyens (30) pour refouler le liquide, sensiblement en forme de pot et rotatif autour d'un axe de rotation (A), un stator (34) de forme annulaire et présentant un enroulement de moteur (32), qui, relativement à un agencement coaxial à l'axe de rotation (A), entoure au moins partiellement le rotor (28) vu le long de l'axe de rotation (A), ainsi qu'un capteur de champ magnétique (36) pour la reconnaissance de position du rotor (28), pompe dans laquelle le carter (16) présente une partie de carter de stator (40), qui porte le stator (34), sépare celui-ci d'une chambre à liquide (42) dans laquelle est agencé le rotor (28), et qui, vu le long de l'axe de rotation (A), s'étend avec un épaulement de carter (48) à l'intérieur du rotor (28), **caractérisée en ce que** l'épaulement de carter (48) de la partie de carter de stator (40), qui, vu le long de l'axe de rotation (A), s'étend à l'intérieur du rotor (28), est conçu pour accueillir le capteur de champ magnétique (36) **et en ce que** dans le carter (16) est intégrée une platine d'électronique (92) à laquelle sont connectées les parties électriques de la pompe à liquides (10), par l'intermédiaire de connexions par emmanchement de broches ou par soudage ou par brasage.

2. Pompe à liquides (10) selon la revendication 1, **caractérisée en ce que** le carter (16) peut être bridé sur un réservoir de liquide (12) par l'intermédiaire d'une surface de bridage (14) extérieure de la pompe, et qui, en étant d'une configuration en plusieurs parties, possède en-dehors de la partie de carter de stator (40), une partie de carter de pompe (38), qui présente l'entrée de liquide (18) et la sortie de liquide (20), et délimite, en commun avec la partie de carter de stator (40), la chambre de liquide (42), et une partie de carter de moteur (44), qui délimite, en commun avec la partie de carter de stator (40), une chambre d'électronique (46) dans laquelle se trouve au moins le stator (34).

3. Pompe à liquides (10) selon la revendication 2, **caractérisée en ce que** la partie de carter de pompe (38) et la partie de carter de moteur (44) sont réalisées sous forme de pièces en matière plastique, et sont soudées l'une à l'autre.

4. Pompe à liquide (10) selon la revendication 2 ou la revendication 3, **caractérisée en ce que** la partie de carter de stator (40) présente une bride de carter de stator (116), qui est enserrée entre la partie de carter de pompe (38) et la partie de carter de moteur (44), et assure le centrage de la partie de carter de stator (40) sur la partie de carter de moteur (44) relativement à l'axe de rotation (A).

5. Pompe à liquides (10) selon l'une des revendications 2 à 4, **caractérisée en ce qu'il** est prévu un élément d'étanchéité (50), qui, simultanément, assure l'étanchéité sur la surface de bridage (14) extérieure de la pompe, du carter (16), par rapport au réservoir de liquide (12), sépare la chambre de liquide (42) de la chambre d'électronique (46), et assure l'étanchéité de la chambre d'électronique (46) par rapport à l'environnement.

6. Pompe à liquides (10) selon la revendication 5, **caractérisée en ce que** la surface de bridage (14) extérieure de la pompe, du carter (16), est munie d'une rainure périphérique (120) destinée à accueillir un premier tronçon d'étanchéité (122) de l'élément d'étanchéité (50), qui fait saillie, avec deux lèvres d'étanchéité (124, 126), de la surface de bridage (14) extérieure de la pompe, en vue d'assurer l'étanchéité par rapport au réservoir de liquide (12).

7. Pompe à liquides (10) selon la revendication 5 ou la revendication 6, **caractérisée en ce que** la partie de carter de pompe (38) présente une bride de carter de pompe (52) sur laquelle sont formées, sur des cotes opposés, la surface de bridage (14) extérieure de la pompe et une surface de bridage (54) intérieure de la pompe, qui est munie d'une rainure périphérique (128) destinée à accueillir un deuxième tronçon d'étanchéité (130) de l'élément d'étanchéité (50), qui fait saillie, avec deux lèvres d'étanchéité (132, 134), de la surface de bridage (54) intérieure de la pompe, et dont une lèvre d'étanchéité (132) interagit avec la partie de carter de stator (40) pour séparer la chambre de liquide (42) de la chambre d'électronique (46), tandis que l'autre lèvre d'étanchéité (134) interagit avec la partie de carter de moteur (44) en vue d'assurer l'étanchéité de la chambre d'électronique (46) par rapport à l'environnement.

8. Pompe à liquides (10) selon l'une des revendications 5 à 7, **caractérisée en ce que** l'élément d'étanchéité (50) réalisé en un matériau élastomère, est fixé à la partie de carter de pompe (38), à savoir notamment par complémentarité de formes, en étant moulé par injection sur la partie de carter de pompe (38).

9. Pompe à liquides (10) selon l'une des revendications 6 à 8, **caractérisée en ce qu'**entre la rainure périphérique (120) sur la surface de bridage (14) extérieure de la pompe et la rainure périphérique (128) sur la surface de bridage (54) intérieure de la pompe, sont prévues une pluralité d'ouvertures (138) qui sont espacées les unes des autres dans la direction périphérique, et sont traversées par le matériau élastomère injecté de l'élément d'étanchéité (50), en vue de relier mutuellement le premier tronçon d'étanchéité (122) et le deuxième tronçon d'étanchéité (130) de l'élément d'étanchéité (50).

10. Pompe à liquides (10) selon l'une des revendications précédentes, **caractérisée en ce que** des tôles polaires (102) du stator (34) sont noyées dans la partie de carter de stator (40) réalisée en une matière plastique, en étant surmoulées par injection de matière plastique.

11. Pompe à liquides (10) selon l'une des revendications précédentes, **caractérisée en ce que** dans le carter (16) est intégré un capteur de température (100), de préférence à proximité de la sortie de liquide (20), en étant de préférence reçu dans un évidement d'accueil (114) dans la partie de carter de stator (40).

12. Pompe à liquides (10) selon l'une des revendications précédentes, **caractérisée en ce que** l'entrée de liquide (18) du carter (16) est orientée transversalement à l'axe de rotation (A) du rotor (28).

13. Pompe à liquides (10) selon l'une des revendications précédentes, **caractérisée en ce que** le rotor (28) possède un tronçon cylindrique extérieur (140) à aimantation permanente interagissant avec l'enroulement de moteur (32), ainsi qu'un tronçon de fond (142), qui est réalisé sous forme de roue à ailettes sur le cote oppose à celui dirigé vers l'épaulement de carter (48) de la partie de carter de stator (40), le rotor étant réalisé en un matériau magnétique a liant synthétique et étant directement moulé par injection sur un arbre de rotor (144) monté rotatif dans le carter (16).

14. Pompe à liquides (10) selon la revendication 13, **caractérisée en ce que** l'arbre de rotor (144) est monté, de part et d'autre du tronçon de fond (142), directement dans le carter (16), au moins de manière radiale, à savoir, d'un côté dans l'épaulement de carter (48) de la partie de carter de stator (40), et de l'autre côté dans un embout de palier (68) de la partie de carter de pompe (38).
